# EUROPEAN PATENT APPLICATION

(11) **EP 2 230 785 A2**
(43) Date of publication of application: **22.09.2010**
(21) Application number: 10001669.0
(22) Date of filing: 18.02.2010
(51) Int. Cl.: H04J 3/16

(54) **Optical line terminal, passive optical network system, and bandwidth assignment method**

(30) Priority: 18.03.2009 JP 2009065463
(71) Applicant: Hitachi, Ltd., Chiyoda-ku Tokyo 100-8280 (JP)
(72) Inventor: Ikeda, Hiroki, Tokyo 100-8220 (JP); Kazawa, Tohru, Tokyo 100-8220 (JP)
(74) Representative: Strehl Schübel-Hopf & Partner

(57) **Abstract**

An OLT of a station-side device in a PON system, the OLT including: an MPCP control unit for receiving bandwidth requirements from each of a plurality of ONUs of home-side devices; a bandwidth assignment period calculation unit for calculating the following bandwidth assignment period for each request source based on the received bandwidth requirements for each request source; a dynamic bandwidth assignment calculation unit for calculating the following bandwidth assignment for each request source based on the received bandwidth requirements for each request source; and the MPCP control unit for transmitting transmission allowance based on the calculated bandwidth assignment to each of the plurality of ONUs.

## Description

### FIELD OF THE INVENTION

The present invention relates to a high-speed optical access network and, more specifically, to a technique effectively applied to a passive optical network (PON) system capable of providing a high-speed Internet service for home through an optical fiber and an optical line terminal being a station-side device applied to the PON system.

### BACKGROUND OF THE INVENTION

According to the inventors' investigation, in the PON system, the speed and the bandwidth of a communication network are being increased to transmit and receive a large amount of image signals or data even in an access network for connecting a subscriber to a communication network. The PON system specified by the recommendation G984.1-3 of the International Telecommunication Union (hereinafter, referred to as ITU-T) has been introduced.

The PON system is one in which the OLT being the station-side device connected to a host communication network is connected to an optical network unit (ONU) being a user's home-side device housing a plurality of subscriber terminals (PC or telephone) by an optical passive network including a trunk optical fiber, an optical splitter, and a plurality of stay optical fibers.

The optical fiber network of the PON system includes a concentration optical fiber connected to the OLT, a plurality of stay optical fibers connected to the ONUs, and an optical splitter (or an optical coupler) connecting the stay optical fibers to the concentration optical fiber and is an optical distribution network (ODN) in which a plurality of the ONUs can share an optical transmission line between the OLT and the optical splitter.

The cost of laying down the optical fiber of the PON system can be substantially made smaller than that using other broad band access techniques. In particular, a Gigabit-Ethernet PON (GE-PON) and a Gigabit-Capable PON (GE-PON) system are capable of transferring a variable-length data frame at a Gigabit-level high-speed and providing an end user with various types of broad band network applications. The GE-PON is disclosed in IEEE802.3ah "Ethernet in the First Mile." The G-PON is disclosed in the recommendation of ITU-T G.984.1 "Gigabit-Capable Passive Optical Networks (GPON): General characteristics."

In the PON system, an upstream bandwidth of an upstream signal is dynamically assigned to a plurality of the ONUs with time-division access to prevent signals from interfering in one another between the ONUs being the user's home-side devices. When a bandwidth control is performed by a method specified by the ITU-T recommendation G.983.4 being a conventional method, a dynamic bandwidth assignment (DBA) function is realized by the OLT of the station-side device analyzing data storage information of an upstream cell buffer collected.from the ONU for each polling period. In other words, a larger upstream bandwidth yet to be used is assigned to the ONU storing a large amount of data.

Specifically, the OLT of the station-side device receives a request for a bandwidth for data amount desired to be previously transmitted upstream from the ONUs of the user's home-side devices, determines a bandwidth to be assigned thereto and notifies (grants) the ONU of an allowable transmission bandwidth. The grant includes a transmission starting time and an allowable transmission length. This allows the ONU to transmit upstream a predetermined amount of data.

The method of assigning the upstream transmission bandwidth for a request for the bandwidth from a plurality of the ONUs of the user's home-side devices is classified into the following two types: a distribution DBA in which on arrival of a request from one ONU, for example, the OLT assigns a bandwidth to the ONU as required; and a centralization DBA in which the OLT collects requests for the bandwidth from a plurality of the ONUs (generally, all of the ONUs) in the polling period and generally assigns bandwidths based on the requests for the bandwidth therefrom.

The term polling period refers to a period in which the request for the bandwidth is collected from the ONU. A bandwidth assignment period refers to a period in which data is transmitted from the ONU granted. The polling period may be similar to or different from the bandwidth assignment period.

For example, for the relationship between the polling period and the bandwidth assignment period, it is known that the polling period is similar the bandwidth assignment period in the distribution DBA. In the centralization DBA, on the other hand, it is known that a service class is classified into a low delay class in which the maximum value of delay is defined based on one upstream polling period and a normal delay class in which the maximum value of delay is not defined, the bandwidth assignment period of the low delay class is set smaller than that of the normal delay class to make compatible the effective use of the low delay and the bandwidth.

A method of controlling such a polling period is disclosed in WO publication No. 99/038292. According to the publication, when the ONU receives a bursty traffic, the ONU controls the polling period to control the data delay.

In an Internet protocol (IP) network, a video delivery service requiring a high-speed data transfer has been activated such as a triple play service merging together broadcasting, telephone, and data communication in addition to speech communication and data service. A network television (Internet protocol television IPTV) in the triple play service is one of the most important broad band applications.

The IP network mainly uses the TCP and the UDP protocol to transfer a packet. A transport control protocol (TCP) is used in a data service high in reliability and a user datagram protocol (UDP) is used in speech communication and IPTV service are stringent in delay. The PON can also transfer these packets to which bandwidths are assigned. The PON system assigns the bandwidth of the normal delay class to the TCP packet and assigns the bandwidth of the low delay class to the UDP packet.

In general, the throughput of the TCP is determined by a window size and round-trip time (RTT). The PON transfers a packet for the window size at a high speed by a TCP packet assigning a large bandwidth thereto, realizing a high throughput.

In a 1 Gbps-class GE-PON, for example, when 32 user's home-side devices are connected, an average assignment bandwidth for each ONU is approximately 30 Mbps. If the window size is 64 Kbytes, the throughput of the TCP can reach 30 Mbps in an RTT of 17.1 msec or less. The RTT includes data delay in not only the PON but the network portion. In the 1 Gbps-class GE-PON, the influence of data delay in the PON is small.

### SUMMARY OF THE INVENTION

As a result of study of the inventors, the following becomes clear with respect to the aforementioned PON system. For example, in the 1 Gbps-class GE-PON, an influence which data delay due to the bandwidth assignment period exerts on the RTT of the TCP is small, which does not affect the throughput of the TCP. In the 10 Gbps-class PON, however, if the bandwidth assignment period is constant, data delay is also constant, which causes a problem that the throughput cannot be increased if such a data transfer protocol as to confirm whether data can be transferred like the TCP.

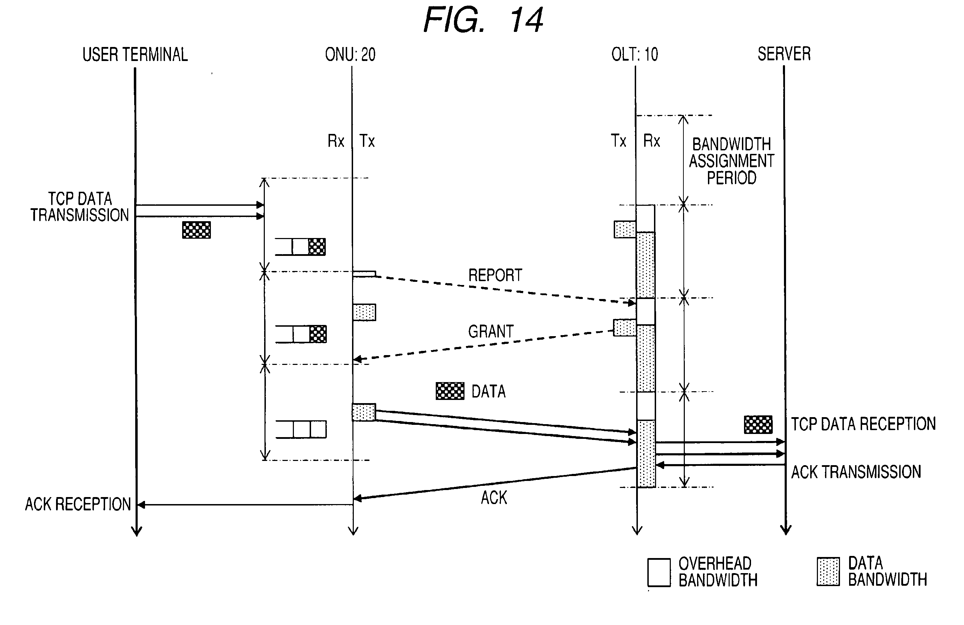

The relationship between the RTT and the throughput is described below with reference to Fig. 14. Described below is the transmission of TCP data from a user terminal to a server. The user terminal transmits the TCP data. An ONU 20 receives the TCP data, then transmits a bandwidth request (Report) and receives a notification (grant) of the allowable transmission bandwidth from an OLT 10. The ONU 20 transmits data at the time allowed. The OLT 10 transmits the received TCP data to the server. The server receives the TCP data and then transmits an ACK being confirmation response to the user terminal. The user terminal receives the ACK and then transmits the next TCP data. In general, the TCP defines the amount of packets capable of being transmitted until the ACK is received as a TCP window size. The RTT is defined as time during which the TCP data is transmitted and then the ACK is received. For the data transfer in the PON, a time during which the ONU 20 transmits the bandwidth request and then receives data is defined as a delay.

For example, in the 10 Gbps-class GE-PON, when 32 user' s home-side devices are connected, an average assignment bandwidth for each ONU is approximately 300 Mbps. If the window size is 64 Kbytes, the throughput of the TCP can reach 300 Mbps in an RTT of 17.1 msec or less. At this point, the influence of data delay in the PON is large.

In the foregoing conventional system, the bandwidth assignment period is determined only by the service class and data delay in the PON for each service class is fixed, so that the RTT of data such as the TCP is also fixed, which does not increase the throughput of data such as the TCP. It is needless to say that the window size may be increased, which is however not enough to solve the problem because the increase of the window size causes a problem that a large amount of retransmission packets is produced if a packet is lost.

The data delay in the PON is determined by the process time of the DBA. This mainly includes a time during which the PON receives the bandwidth request of data amount, determines the bandwidth to be assigned thereto, and grants the allowable transmission bandwidth. In general, as described above, the data delay in the PON is N times as long as the polling period and the bandwidth assignment period.

In such a conventional DBA technique, a maintenance signal needs to be transmitted at least once for each polling period in the transmission timing granted to the ONU of the user' s home-side device by the OLT of the station-side device. When the ONU transmits data, the ONU transmits a data signal at least once for each bandwidth assignment period. The ONU needs to transmit a signal for synchronizing a clock with a signal for adjusting the level of the signal immediately before the data is transmitted. This decreases the bandwidth for transmitting the data by the bandwidths for transmitting the maintenance signal and adjusting the level of the signal. The shorter the polling period and the bandwidth assignment period, the larger the decrease in the bandwidth.

A method for reducing the data delay is described below. An method of reducing the bandwidth assignment period is exemplified to reduce the data delay. The bandwidth assignment period determines the data delay. Therefore, the polling period and the bandwidth assignment period are carelessly increased to decrease the decrease in the bandwidth, which causes a problem that the data delay is increased. This makes it difficult to select the bandwidth assignment period.

Furthermore, even though the polling period is controlled using the method disclosed in WO publication No. 99/038292, the throughput of data such as the TCP cannot be increased.

The object of the present invention is to provide a communication service capable of being used in service large in degradation of throughput due to delay of TCP data, for example, and maximizing throughput for each subscriber request source by optimizing data transfer delay and assignment bandwidth.

The above and other objects and novel features of the present invention will become apparent from the following description and the attached drawings of the present specification.

An outline of typical aspects of the invention, among those disclosed in the present application, is briefly described below.

According to the typical aspects of the invention, an OLT of a station-side device includes: a bandwidth request reception means for receiving bandwidth requirements from each of the plurality of ONUs of station-side devices; a bandwidth assignment period calculation means for calculating the following bandwidth assignment period for each request source based on the received bandwidth requirements for each request source; a bandwidth assignment calculation means for calculating the following bandwidth assignment for each request source based on the received bandwidth requirements for each request source; and a transmission allowance transmission means for transmitting transmission allowance based on the calculated bandwidth assignment to each of the plurality of ONUs.

Advantages obtained by the typical aspects of the invention, among those disclosed in the present application, are briefly described below.

In other words, advantages obtained by the typical aspects of the invention are that a communication service capable of maximizing throughput for each subscriber request source can be provided because the dynamic bandwidth assignment is performed while data delay and overhead are taken into consideration.

### BRIEF DESCRIPTION OF THE DRAWINGS

Fig. 1 is a block diagram showing a configuration of a PON system and an internal configuration of an OLT of the first embodiment according to the present invention;
Fig. 2 is a block diagram showing an internal configuration of an ONU in the first embodiment according to the present invention;
Fig. 3 is a diagram showing the polling period and the bandwidth assignment period in the OLT in the first embodiment according to the present invention;
Fig. 4 is a diagram showing another polling period and bandwidth assignment period in the OLT in the first embodiment according to the present invention;
Fig. 5 is a flow chart showing the process of a DBA function in the first embodiment according to the present invention;
Fig. 6 is an example of the bandwidth request of data amount and the notification of the allowable transmission bandwidth in the first embodiment according to the present invention;
Fig. 7 is a table showing an ONU management table in the first embodiment according to the present invention;
Fig. 8 is a diagram describing the throughput of a TCP in the first embodiment according to the present invention;
Fig. 9 is a block diagram showing an internal configuration of an ONU in the second embodiment according to the present invention;
Fig. 10 is a flow chart showing the process of a DBA function in the second embodiment according to the present invention;
Fig. 11 is a flow chart showing the process of a DBA function in the third embodiment according to the present invention;
Fig. 12 is a flow chart showing the process of a DBA function in the fourth embodiment according to the present invention;
Fig. 13 is a flow chart showing the process of a DBA function in the fifth embodiment according to the present invention; and
Fig. 14 is a diagram describing the flow of TCP data in a general PON system.

### DETAILED DESCRIPTION OF THE PREFERRED EMBODIMENTS

The embodiments of the present invention are described in detail below with respect to drawings. In all the drawings describing the embodiments, the similar members are dented by the same reference numerals and characters in principle to omit the description thereof.

In the following embodiments, there is described an example where the present invention is applied to the G-PON using the ITU standard, the present invention however can be applied to other PON systems in addition to the G-PON, such as, for example, the GE-PON suited for transfer of information by the Ethernet (registered trademark) frame and a broadband PON (B-PON) for transferring information by a fixed-length ATM cell in a PON section.

### First Embodiment

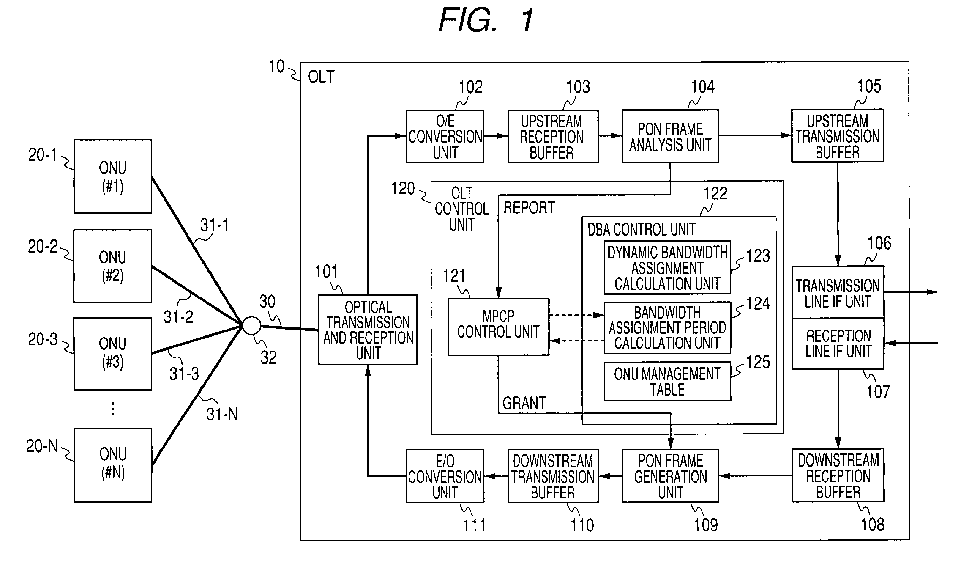

The PON system of the first embodiment according to the present invention is described below based on Figs. 1 to 8.

Fig. 1 is a block diagram showing a configuration of a PON system of the first embodiment according to the present invention.

The PON system includes an OLT (also referred to as a station-side device or an optical line terminal) 10, a plurality of ONUs (also referred to as a user' s home-side device or an optical network unit) 20 (#1: 20-1, #2: 20-2, #3: 20-3, ..., #N: 20-N), and an optical distribution network (ODN) in a PON section for connecting these elements. The optical distribution network in the PON section includes a concentration optical fiber 30 connected to the OLT 10 and stay optical fibers 31 (31-1 to 31-N) connected to the ONUs 20. The stay optical fibers 31 are branched from the concentration optical fiber 30 by an optical splitter (or an optical coupler) 32. The OLT 10 is generally installed in a user-line accommodation station owned by a carrier or an Internet service provider (ISP) and the ONU 20 is installed in a building such as an office, a condominium and the like or a user's home.

The present embodiment is based on the GE-PON with an upstream transmission rate from each ONU 20 to the OLT 10 of 1 Gbps. Therefore, the access control of the ONU 20 is basically performed in accordance with the communication system of the GE-PON. The ONU 20 transmits a request (also referred to as a bandwidth request or a report) which represents the amount of data transmitted from the ONU 20 to the OLT 10 in units of two bytes and a grant (notification of allowable transmission bandwidth) corresponding to the request is represented by an allowable transmission length in units of two bytes and a transmission start time. Time is represented by the value of a counter incrementing every 16 ns and synchronized in the PON system.

### Configuration of OLT

Fig. 1 is a block diagram showing an internal configuration of the OLT. The OLT 10 performs the dynamic bandwidth assignment.

In Fig. 1, the OLT 10 includes a reception line IF unit 107 for receiving a downstream signal to be transmitted to the ONU 20 from an upstream network, a downstream reception buffer 108 for temporarily storing the received downstream signal, a PON frame generation unit 109 for generating a PON frame, a downstream transmission buffer 110 for temporarily storing the PON frame to be transmitted, an E/O conversion unit 111 for converting an electric signal to an optical signal, and an optical transmission and reception unit 101 for inputting the optical signal to an optical fiber.

Furthermore, the OLT 10 includes an optical transmission and reception unit 101 for receiving an upstream optical signal to be transmitted to the upstream network from the ONU 20, an O/E conversion unit 102 for converting the optical signal to an electric signal, an upstream reception buffer 103 for temporarily storing the received upstream signal, a PON frame analysis unit 104 for analyzing the PON frame, an upstream transmission buffer 105 for temporarily storing a signal to be transmitted, and a transmission line IF unit 106 for transmitting the signal to the upstream network.

Still furthermore, the OLT 10 includes an OLT control unit 120 equipped with a multi-point control protocol (MPCP) control unit 121 having functions of a bandwidth request reception means for receiving bandwidth requirements from each ONU 20 and a transmission allowance transmission means for transmitting transmission allowance to each ONU 20 based on a calculated bandwidth assignment and a DBA control unit 122. The DBA control unit 122 includes a dynamic bandwidth assignment calculation unit 123 having a function of a bandwidth assignment calculation means for calculating the following bandwidth assignment for each request source based on the received bandwidth requirements for each request source, a bandwidth assignment period calculation unit 124 having a function of a bandwidth assignment period calculation means for calculating the following bandwidth assignment period for each request source based on the received bandwidth requirements for each request source, and an ONU management table 125.

The MPCP control unit 121 transmits and receives the bandwidth request signal of data amount and the notification signal of the allowable transmission bandwidth. The MPCP control unit 121 receives the bandwidth request of data amount, the dynamic bandwidth assignment calculation unit 123 determines the bandwidth to be assigned thereto, the bandwidth assignment period calculation unit 124 determines a bandwidth assignment period, and the MPCP control unit 121 performs notification (grant) of the allowable transmission bandwidth. The grant is formed of transmission start time and the allowable transmission length. Thus, the ONU 20 can transmit a predetermined amount of upstream data.

### Configuration of ONU

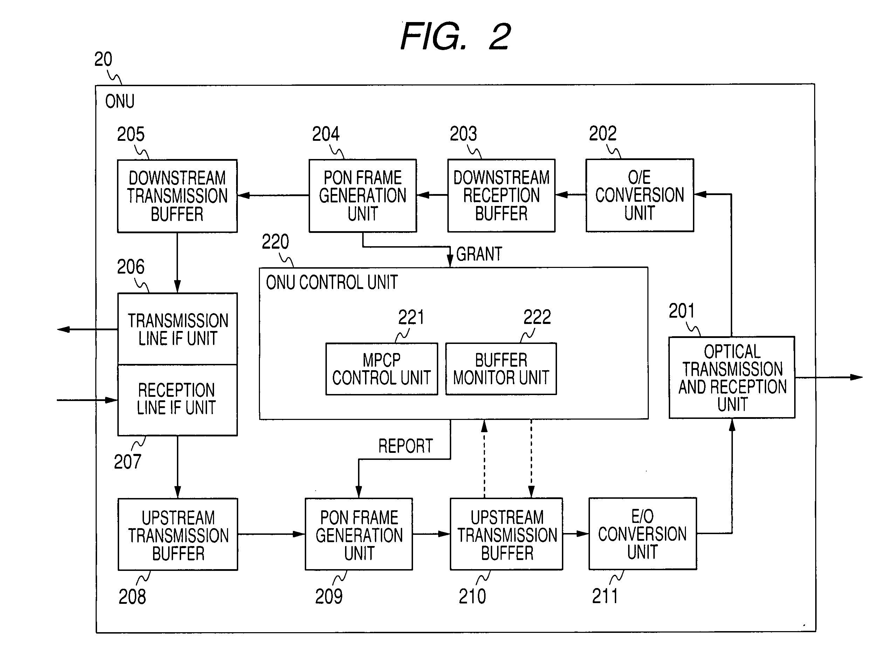

Fig. 2 is a block diagram showing an internal configuration of the ONU. The ONU 20 performs a bandwidth request based on the amount of data storage of the dynamic bandwidth assignment.

In Fig. 2, the ONU includes a reception line IF unit 207 for receiving an upstream signal to be transmitted to the OLT 10 from a user terminal, an upstream reception buffer 208 for temporarily storing the received upstream signal, a PON frame generation unit 209 for generating a PON frame, an upstream transmission buffer 210 for temporarily storing the PON frame to be transmitted, an E/O conversion unit 211 for converting an electric signal to an optical signal, and an optical transmission and reception unit 201 for inputting the optical signal to an optical fiber.

Furthermore, the ONU 20 includes an optical transmission and reception unit 201 for receiving a downstream optical signal to be transmitted to the user terminal from the OLT 10, an O/E conversion unit 202 for converting the optical signal to an electric signal, a downstream reception buffer 203 for temporarily storing the received downstream signal, a PON frame analysis unit 204 for analyzing the PON frame, a downstream transmission buffer 205 for temporarily storing a signal to be transmitted, and a transmission line IF unit 206 for transmitting the signal to the user terminal.

Still furthermore, the ONU 20 includes an ONU control unit 220 having an MPCP control unit 221 and a buffer monitor unit 222. The buffer monitor unit 222 monitors the amount of data storage in the upstream transmission buffer 210. The MPCP control unit 221 transmits and receives the bandwidth request signal of data amount and the notification signal of the allowable transmission bandwidth based on the amount of data storage from the buffer monitor unit 222. The MPCP control unit 221 performs the notification of bandwidth request of data amount and receives the notification (grant) of the allowable transmission bandwidth from the OLT 10. The grant is formed of transmission start time and the allowable transmission length. Thus, the ONU 20 can transmit a predetermined amount of upstream data.

### Dynamic Bandwidth Assignment

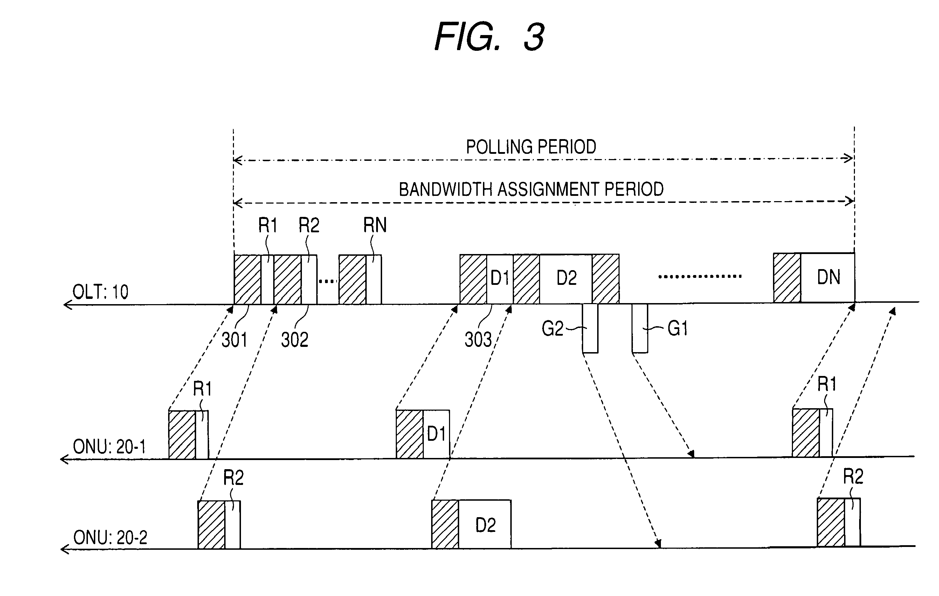

The DBA control unit 122 of the OLT 10 performs the centralization DBA. Fig. 3 is a sequence diagram of the centralization DBA. As shown in Fig. 3, in the centralization DBA, a single grant G simultaneously performs a bandwidth assignment for both request and data.

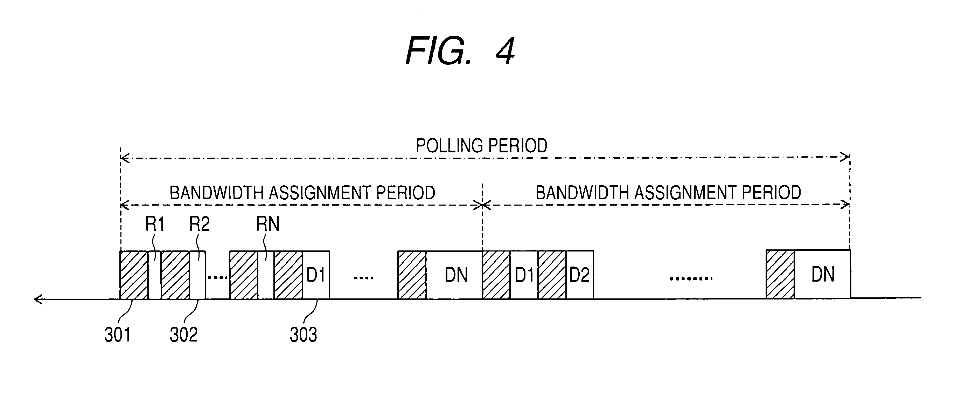

Each ONU 20 separately transmits the requests (R1 to RN) 302 and data (D1 to DN) 303 to which an overhead bandwidth 301 is added according to the grant G. First, the OLT 10 collectively receives only the requests separately from the data and starts the bandwidth assignment process when it finishes receiving the requests of each ONU 20.
A typical example of the centralization DBA preferentially assigns a bandwidth to the request from the ONU 20 that lacks for bandwidth assignment in the range of the bandwidth assignment period (grant cycle). The OLT 10 of the present embodiment also performs this type of the centralization DBA. The ONU 20 transmits the bandwidth request signal to the OLT 10 for each polling period. Fig. 4 is a sequence diagram in which the polling period is different from the bandwidth assignment period. As shown in Fig. 4, the DBA can also set small the bandwidth assignment period to reduce the transfer delay of data in the PON.

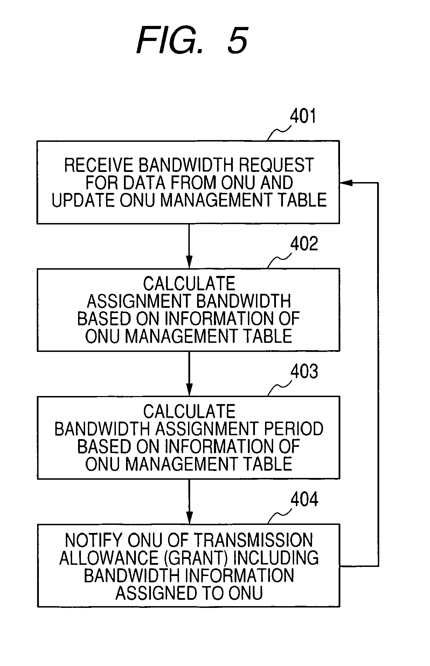

Fig. 5 is a flow chart showing the process of a DBA function. In step 401, the MPCP control unit 121 receives a bandwidth request for data from the ONU 20 and updates the ONU management table 125. In step 402, the dynamic bandwidth assignment calculation unit 123 calculates an assignment bandwidth based on information of the ONU management table 125. The dynamic bandwidth assignment calculation unit 123 performs a dynamic bandwidth assignment process for determining how much communication bandwidth is assigned to each of a plurality of the ONUs 20. The communication bandwidth denotes how much byte length out of the total byte length that can be transmitted in one bandwidth period is assigned to each ONU 20. In step 403, the bandwidth assignment period calculation unit 124 calculates the bandwidth assignment period based on information of the ONU management table 125. In step 404, the MPCP control unit 121 notifies the ONU 20 of the transmission allowance (grant) including the bandwidth information assigned to the ONU 20. The ONU 20 instructed by the grant transmits upstream data based on the grant. Each ONU 20 transmits data at the timing when the ONU 20 is allowed to transmit data by the OLT 10. Each ONU 20 determines the timing to finish transmitting by the allowed communication byte length.

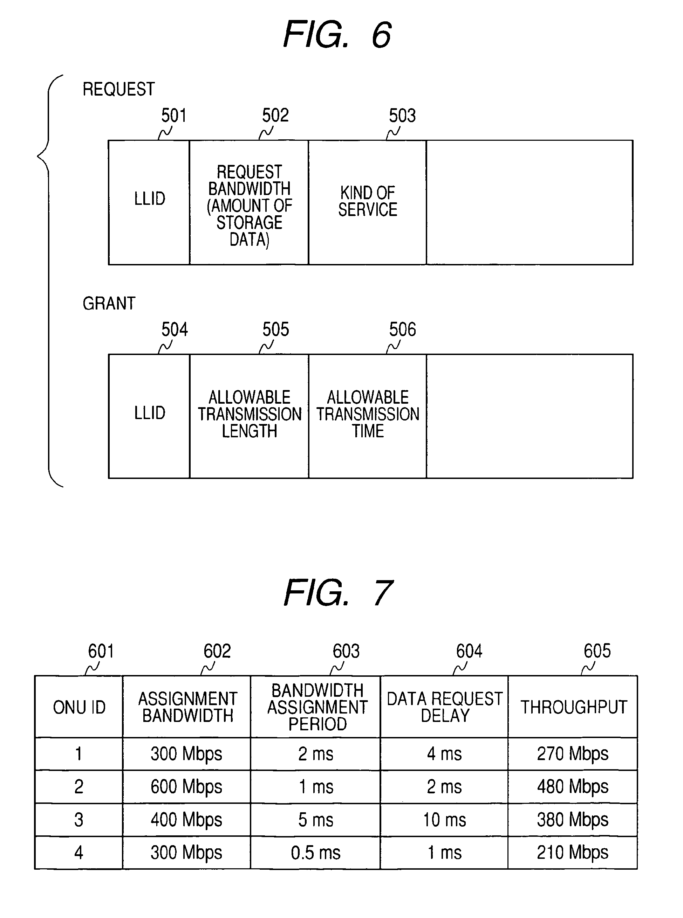

Fig. 6 is an example of the bandwidth request of data amount and the notification (grant) of the allowable transmission bandwidth. The request includes an LLID 501, a request bandwidth value (amount of storage data) 502, and kind of data service 503. The grant includes an LLID 504, an allowable transmission length 505, and an allowable transmission time 506. Although only one of the respective values is included in the example, a plurality of the values may be included. The logical link ID (LLID) is a logical link to identify the ONU. If the ONU is provided with a plurality of buffers, the LLID may be assigned to each buffer. Therefore, if the buffer is assigned to each kind of service of data, request bandwidth and transmission allowance can be provided for each kind of service of data.
Fig. 7 shows an example of an ONU management table. The ONU management table 125 stores an ONUID 601 (or LLID), an assignment bandwidth 602 for each ONU, a bandwidth assignment period 603, a data request delay 604, and a throughput 605, as information for transmitting the notification (grant) of the allowable transmission bandwidth of DBA. The assignment bandwidth 602 is determined by the dynamic bandwidth assignment calculation unit 123. The bandwidth assignment period 603 is determined by the bandwidth assignment period calculation unit 124. Methods of determining these values are described later. The data request delay 604 is transmitted based on the request from each ONU. The throughput 605 calculates a value in which a bandwidth required for overhead is subtracted from assignment bandwidth. In other words, the throughput = (assignment bandwidth) - (overhead bandwidth). The overhead is composed of a maintenance signal and synchronous time of data as described above.
Below are described specific functions of the dynamic bandwidth assignment calculation unit 123 and the bandwidth assignment period calculation unit 124.
In a normal operation, only the contracted bandwidth is assigned to each ONU 20. If the DBA function is effective, the contracted bandwidth is assigned to all the connected ONUs 20 and then, if there is a request from the ONU 20 in the case where a bandwidth still to be used exists, an area yet to be used may be used to increase the bandwidth for the ONU 20. Thus, a method of effectively using the bandwidth still to be used is the DBA function in the PON system. Refer to ITU-T recommendation G.983.4 for further details of the function.
The dynamic bandwidth assignment calculation unit 123 calculates the assignment bandwidth for the ONU 20 based on the bandwidth request according to the amount of data storage from the ONU 20 using the normal DBA function. The bandwidth assigned to the ONU 20 includes the overhead for a synchronization signal and a maintenance signal. As described above, when the ONU 20 transmits data, the ONU 20 needs to transmit a signal for synchronizing a clock with a signal for adjusting the level of the signal at least once for each bandwidth assignment period immediately before the data is transmitted. This decreases the bandwidth for transmitting the data by the bandwidth for adjusting the level of the signal. The shorter the bandwidth assignment period, the larger the decrease in the bandwidth. That is to say, the bandwidth assignment period needs to be determined before the calculation of the throughput for each ONU.
A method of determining the bandwidth assignment period is described below. The bandwidth assignment period calculation unit 124 determines a bandwidth period based on the bandwidth for the signal for synchronizing the clock with the signal for adjusting the level of the signal and the data request delay.
In the GE-PON, as the bandwidth for the signal for synchronizing the clock with the signal for adjusting the level of the signal, the ON/OFF time of laser is defined as 512 nsec and the clock synchronization time is 800 nsec. A guard band time of approximately 1 µsec to 5 µsec is set between the ONU signals to prevent signals from interfering with each other. Hereinafter, these bandwidths are referred to as an overhead bandwidth. Actual parameters are not limited to those, because the parameters depend on the design specifications of the system. In other words, the overhead bandwidth is increased according as the bandwidth assignment period is decreased.
Here we assume that 300 Mbps, for example, is assigned to the bandwidth of the ONU. If the bandwidth assignment period is 0.5 msec and the overhead bandwidth is taken as 30%, the throughput becomes 210 Mbps (300 Mbps × 70%). If the bandwidth assignment period is 2 msec, the overhead bandwidth is taken as 10%, the throughput becomes 270 Mbps (300 Mbps × 90%). Therefore, the shorter the bandwidth assignment period, the more the throughput; and the longer the bandwidth assignment period, the less the throughput. The throughput and the bandwidth assignment period have a relationship of trade-off.
The data transfer delay in the PON system is the time during which the ONU 20 receives data, transmits a request signal, receives a grant signal, and transmits data. The delay includes a propagation delay in an optical fiber and a calculation process time of the system. That is to say, the bandwidth assignment period may be calculated based on the request delay of the PON system.
If the data request delay is 4 msec, for example, and if the range of the bandwidth assignment period is from the transmission of the request signal to the reception of the grant signal, the bandwidth assignment period may be set to 3 msec. Actual parameters are not limited to this, because the parameters depend on the design specifications of the system. For this reason, if the data request delay is 4 msec, the bandwidth assignment period is 2 msec. If the overhead bandwidth is 10%, the throughput is 270 Mbps (300 Mbps × 90%). If the data request delay is 1 msec, the bandwidth assignment period is 0.5 msec. If the overhead bandwidth is 30%, the throughput is 210 Mbps (300 Mbps × 70%).
The bandwidth assignment period calculation unit 124 determines the bandwidth assignment period to maximize the throughput. Here we take a bandwidth request of 210 Mbps from the ONU 20 as an example. As a first example, if a bandwidth of 300 Mbps is assigned as the assignment result of the DBA function, the bandwidth assignment period is 0.5 msec which is the minimum value satisfying a throughput of 210 Mbps. This can achieve a throughput of 210 Mbps with the data delay minimized. As a second example, if a bandwidth of 200 Mbps is assigned as the assignment result of the DBA function, the bandwidth assignment period is 5 msec (previously set upper limit value) and a throughput is 190 Mbps at a maximum.
For the data delay described above, the bandwidth assignment period calculation unit 124 may receive a request from a network operator outside the OLT 10 to set the data request delay or may automatically set the data request delay in collaboration with a server being a transmission source of the data signal.
The above function can maximize the throughput if a data transfer protocol for confirming whether data can be transferred, such as in particular the transport control protocol (TCP), is used. Since the throughput of the TCP depends on the RTT, the data transfer delay in the PON system is desirably minimized. However, it does not make sense if the throughput for each ONU is lowered due to the overhead bandwidth as a result of that.

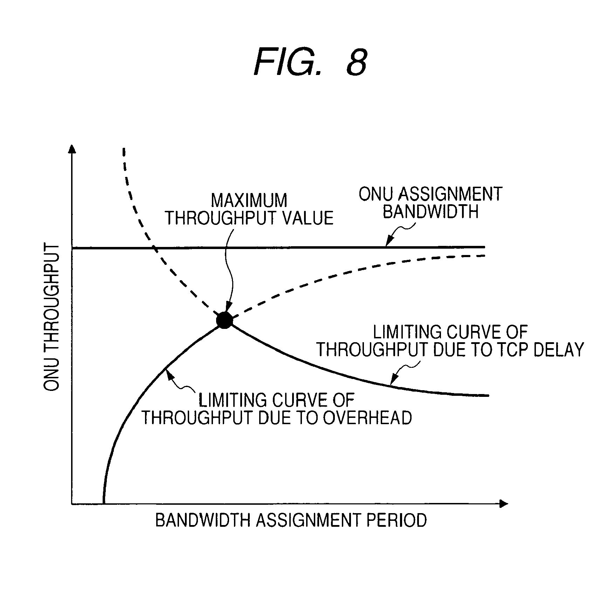

Fig. 8 is a diagram showing the throughput of the TCP. As described above, the greater the limiting curve of the throughput due to overhead, the longer the bandwidth assignment period. This is because a ratio of the overhead to the bandwidth is decreased. On the other hand, the smaller the limiting curve of the throughput due to TCP delay, the longer the bandwidth assignment period. This is because the long bandwidth assignment period increases data transfer delay in the PON, thereby, increasing the RTT of the TCP. As is clear from the figure, both of the throughput and the bandwidth assignment period have a relationship of trade-off. The throughput of the ONU is maximized at the intersecting point of the limiting curves. Therefore, the bandwidth assignment period calculation unit 124 calculates the bandwidth assignment period in which the throughput of the TCP in the PON system is maximized.
Thus, according to the present embodiment, the OLT 10 calculates the following bandwidth assignment period for each request source based on bandwidth requirements for each request source from the ONU 20, calculates the following bandwidth assignment amount for each request source based on the bandwidth requirements for each request source, and transmits the transmission allowance based on the calculated bandwidth assignment amount to each of the ONUs 20, thereby performing the dynamic bandwidth assignment while considering the data delay and the overhead. This allows maximizing the throughput for each subscriber request source.

### Second Embodiment

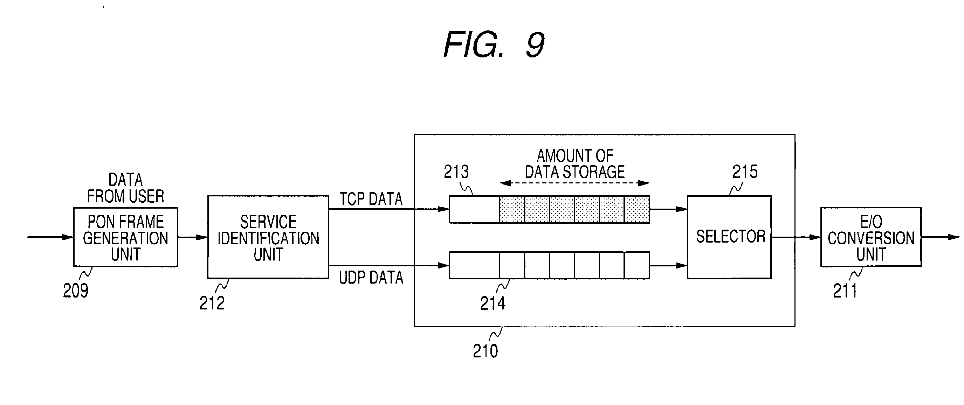

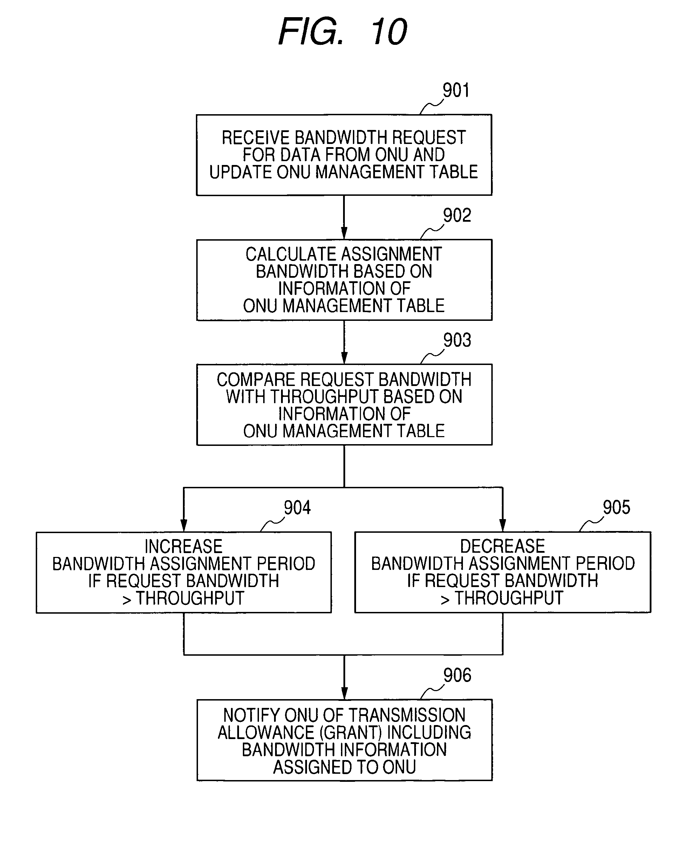

The PON system of the second embodiment according to the present invention is described below based on Figs. 9 and 10.
Fig. 9 is a block diagram showing an internal configuration of an ONU of the second embodiment according to the present invention. The example of Fig. 9 includes a service identification unit 212 with a function of service identification means for identifying and classifying kinds of service of data received from a user terminal and transferring the data between a PON frame generation unit 209 and an upstream transmission buffer 210. The upstream transmission buffer 210 includes a buffer for TCP data 213, a buffer for UDP data 214, and a selector 215. Other components are similar to those in the above first embodiment.
The service identification unit 212 identifies the received packets, classifies them to corresponding buffers and transfer the packets. The MPCP control unit 221 notifies the OLT 10 of the amount of data storage in the buffer for TCP data 213 as the bandwidth request. The DBA control unit 122 in the OLT 10 calculates the assignment bandwidth and the bandwidth assignment period based on the bandwidth request from each ONU.
Fig. 10 is a flow chart showing the process of a DBA function. In step 901, the MPCP control unit 121 receives a bandwidth request for data from the ONU 20 and updates the ONU management table 125. In step 902, the dynamic bandwidth assignment calculation unit 123 calculates an assignment bandwidth based on information of the ONU management table 125. The bandwidth is assigned based on the bandwidth request according to a normal DBA procedure. In step 903, the bandwidth assignment period calculation unit 124 compares the request bandwidth with the throughput of the ONU 20 calculated from the assignment bandwidth based on information of the ONU management table 125. In step 904, the bandwidth assignment period calculation unit 124 increases the bandwidth assignment period if the request bandwidth is greater than the throughput of the ONU 20, which increases the throughput of the ONU 20. On the other hand, in step 905, the bandwidth assignment period calculation unit 124 decreases the bandwidth assignment period if the request bandwidth is smaller than the throughput of the ONU 20, which increases the throughput of the ONU 20. In step 906, the MPCP control unit 121 notifies the ONU 20 of the transmission allowance (grant) including the bandwidth information assigned to the ONU 20.
Thus, the request bandwidth is compared with the throughput of the ONU 20. to increase or decrease the bandwidth period, thereby stepwise optimizing the throughput of the ONU 20. This procedure is performed at a high speed to allow quickly approaching to the optimum bandwidth assignment and bandwidth period, i.e., throughput and data delay.

### Third Embodiment

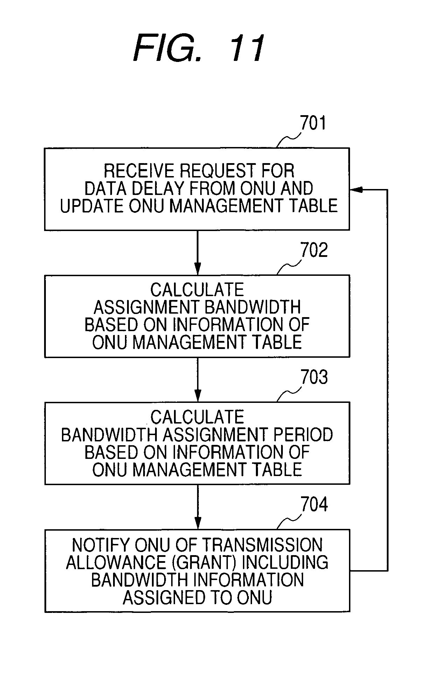

The PON system of the third embodiment according to the present invention is described below based on Fig. 11.
Fig. 11 is a flow chart showing the process of a DBA function of the third embodiment according to the present invention. The present embodiment is an example showing that the throughput of the ONU 20 can be optimized also by receiving a data delay request from each ONU 20.
In step S701, the MPCP control unit 121 receives a request for data delay from the ONU 20 and updates the ONU management table 125. In step S702, the dynamic bandwidth assignment calculation unit 123 calculates an assignment bandwidth based on information of the ONU management table 125. In step S703, the bandwidth assignment period calculation unit 124 calculates a bandwidth assignment period based on information of the ONU management table 125. In step S704, the MPCP control unit 121 notifies the ONU 20 of the transmission allowance (grant) including the bandwidth information assigned to the ONU 20. The ONU 20 instructed by the grant transmits upstream data based on the grant.
As described above, if there is network configuration information or there is previous data transfer delay information on the side of a wide area network, this system is effective. If an IPTV broadcasting download service which is comparatively simple in a network configuration is provided on the PON system as an example of services to be provided, for example, an IPTV server is arranged near the OLT 10 and an IPTV terminal may be connected to the ONU 20. In this case, data delay on the side of a wide area network can be previously known, enabling the calculation of the request bandwidth and data delay by which a high-speed download service can be realized. Consequently, the data delay request is received from each ONU 20 to allow the maximization of the throughput of the ONU 20.

### Fourth Embodiment

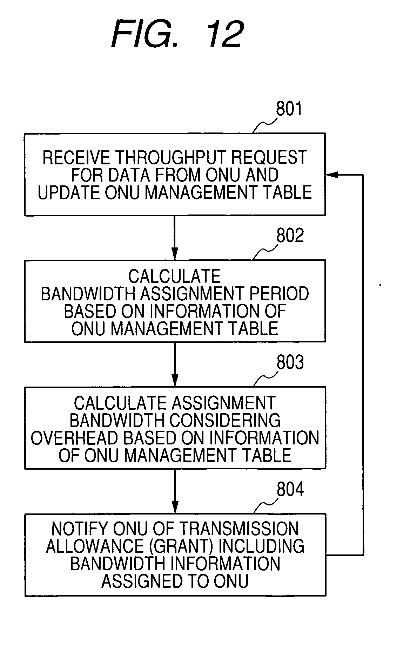

The PON system of the fourth embodiment according to the present invention is described below based on Fig. 12.
Fig. 12 is a flow chart showing the process of a DBA function of the fourth embodiment according to the present invention. The present embodiment is an example showing that the throughput of the ONU 20 can be optimized also by receiving a throughput request from each ONU 20.
In step 801, the MPCP control unit 121 receives a request for throughput from the ONU 20 and updates the ONU management table 125. The request for throughput from the ONU 20 may be performed by the bandwidth request. Particularly, in such a data transfer protocol as to confirm whether data can be transferred like the TCP, the request of throughput may be determined by the combination of the bandwidth requirements 502 and kind of service 503 of the bandwidth request. In step 802, the bandwidth assignment period calculation unit 124 calculates a bandwidth assignment period based on information of the ONU management table 125. In step S803, the dynamic bandwidth assignment calculation unit 123 calculates an assignment bandwidth taking the overhead into account based on information of the ONU management table 125. In step S804, the MPCP control unit 121 notifies the ONU 20 of the transmission allowance (grant) including the bandwidth information assigned to the ONU 20. The ONU 20 instructed by the grant transmits upstream data based on the grant.
As described above, the bandwidth may be assigned by back-calculating a necessary assignment bandwidth from the throughput request of the ONU 20. Since the throughput is important in the transfer protocol such as the TCP, it is also possible to set such a bandwidth assignment and a bandwidth assignment period as to maximize the throughput (Fig. 8).

### Fifth Embodiment

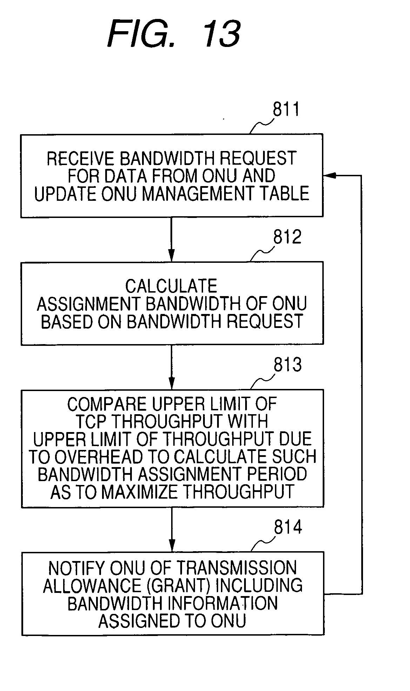

The PON system of the fifth embodiment according to the present invention is described below based on Fig. 13.
Fig. 13 is a flow chart showing the process of a DBA function of the fifth embodiment according to the present invention.
In step S811, the MPCP control unit 121 receives a bandwidth request for data from the ONU 20 and updates the ONU management table 125. In step S812, the dynamic bandwidth assignment calculation unit 123 calculates an assignment bandwidth based on information of the ONU management table 125. In step S813, the bandwidth assignment period calculation unit 124 compares the upper limit of TCP throughput with the upper limit of throughput due to overhead to calculate such a bandwidth assignment period as to maximize the throughput. In step S814, the MPCP control unit 121 notifies the ONU 20 of the transmission allowance (grant) including the bandwidth information assigned to the ONU 20.
As described above, the bandwidth may be assigned by back-calculating a necessary assignment bandwidth from the throughput request of the ONU 20. Since the throughput is important in the transfer protocol such as the TCP, it is also possible to set such a bandwidth assignment and a bandwidth assignment period as to maximize the throughput (Fig. 8).
As described above, if such a data transfer protocol as to confirm whether data can be transferred such like the TCP is transferred by the PON system, the bandwidth of the PON system can be effectively used. The data delay and the throughput in the PON system have a relationship of trade-off, so that the throughput in the PON system can be improved by performing the DBA control taking the data delay and the throughput into consideration.
The invention made by the inventors is described in detail above based on the embodiments. It is a matter of course that the present invention is not limited to the above embodiments and various modifications may be made without departing from the gist of the invention.
The present invention relates to a high-speed optical access network and, more specifically, is applicable to the PON system capable of providing a high-speed Internet service for home through an optical fiber and the OLT used in the PON system.

## Claims

1. An optical line terminal connected to a plurality of optical network units (20) for housing user terminals through an optical distribution network (30, 31), the optical line terminal (10) comprising:
a bandwidth request reception means for receiving bandwidth requirements from each of the plurality of optical network units (20);
a bandwidth assignment period calculation means (124) for calculating the following bandwidth assignment period for each request source based on the bandwidth requirements for each request source received by the bandwidth request reception means;
a bandwidth assignment calculation means (123) for calculating the following bandwidth assignment for each request source based on the bandwidth requirements for each request source received by the bandwidth request reception means; and
a transmission allowance transmission means for transmitting transmission allowance based on the bandwidth assignment calculated by the bandwidth assignment calculation means (123) to each of the plurality of optical network units (20).

2. The terminal of claim 1, wherein the bandwidth assignment period calculation means (124) is adapted to
increase the following bandwidth assignment period if the bandwidth requirements of the optical network units (20) exceed an upper threshold value, and/or
decrease the following bandwidth assignment period if the bandwidth requirements of the optical network units (20) do not exceed a lower threshold value, and/or
not to change the following bandwidth assignment period if the bandwidth requirements of the optical network units (20) are in a certain range.

3. The terminal of claim 1 or 2, wherein
the bandwidth request reception means is adapted to receive a data delay request from each of the plurality of optical network units (20), and
the bandwidth assignment period calculation means (124) is adapted to calculate the following bandwidth assignment period to maximize the throughput of the plurality of optical network units (20).

4. The terminal of any of claims 1 to 3, wherein the bandwidth assignment period calculation means (124) is adapted to
compare the upper limit of TCP throughput with the upper limit of throughput due to overhead to calculate the following bandwidth assignment period so that the throughput of the optical network units (20) is maximized, and/or
calculate the bandwidth assignment period including the overhead from delay information and bandwidth assignment information.

5. The terminal of any of claims 1 to 4, wherein
the bandwidth assignment calculation means (123) is adapted to calculate the following bandwidth assignment based on the throughput requirements for the each request source, and
the bandwidth assignment period calculation means (124) is adapted to calculate the following bandwidth assignment period based on the throughput requirements for the each request source and bandwidth requirements of the overhead.

6. The terminal of any of claims 1 to 4, wherein
the bandwidth assignment calculation means (123) is adapted to calculate the following bandwidth assignment based on the bandwidth requirements for the each request source and the bandwidth requirements of the overhead, and
the bandwidth assignment period calculation means (124) is adapted to calculate the following bandwidth assignment period based on the bandwidth requirements for the each request source and the bandwidth requirements of the overhead.

7. A passive optical network system in which a plurality of optical network units (20) for housing user terminals is connected to an optical line terminal (10) according to any preceding claim connected to a wide area network through an optical distribution network (30, 31).

8. The system of claim 7, wherein
the optical network unit (20) includes a service identification means (212) for identifying and classifying the kind of service of data received from the user terminal and transferring the data, and
the optical line terminal (10) is adapted to perform bandwidth assignment according to bandwidth requirements for each service transferred from the service identification means (212).

9. A bandwidth assignment method in a passive optical network system in which a plurality of optical network units (20) for housing user terminals is connected to an optical line terminal (10) connected to a wide area network through an optical distribution network (30, 31), wherein the passive optical network:
receives bandwidth requirements from each of the plurality of optical network units (20);
calculates the following bandwidth assignment period for each request source based on the received bandwidth requirements for each request source;
calculates the following bandwidth assignment for each request source based on the received bandwidth requirements for each request source; and
transmits transmission allowance based on the calculated bandwidth assignment to each of the plurality of optical network units (20).

10. The method of claim 9, wherein the calculation of the bandwidth assignment period is such that the following bandwidth assignment period is
increased if the bandwidth requirements of the optical network units (20) exceed an upper threshold value, and/or
decreased if the bandwidth requirements of the optical network units (20) do not exceed a lower threshold value, and/or
not changed if the bandwidth requirements of the optical network units (20) are in a certain range.

11. The method of claim 9 or 10, wherein
the reception of the bandwidth requirements is such that a data delay request is received from each of the plurality of optical network units (20), and
the calculation of the bandwidth assignment period is such that the following bandwidth assignment period is calculated to maximize the throughput of the plurality of optical network units (20).

12. The method of any of claims 9 to 11, wherein the calculation of the bandwidth assignment period is such that
the upper limit of TCP throughput is compared with the upper limit of throughput due to overhead to calculate the following bandwidth assignment period so that the throughput of the optical network units (20) is maximized, and/or
the bandwidth assignment period including the overhead is calculated from delay information and bandwidth assignment information.

13. The method of any of claims 9 to 12, wherein
the calculation of the bandwidth assignment is such that the following bandwidth assignment is calculated based on the throughput requirements for the each request source, and
the calculation of the bandwidth assignment period is such that the following bandwidth assignment period is calculated based on the throughput requirements for the each request source and bandwidth requirements of the overhead.

14. The method of any of claims 9 to 12, wherein
the calculation of the bandwidth assignment is such that the following bandwidth assignment is calculated based on the bandwidth requirements for the each request source and the bandwidth requirements of the overhead and
the calculation of the bandwidth assignment period is such that the following bandwidth assignment period is calculated based on the bandwidth requirements for the each request source and the bandwidth requirements of the overhead.

15. The method of claim 9, wherein
the optical network unit identifies and classifies the kind of service of data received from the user terminal and transfers the data, and
the optical line terminal (10) performs bandwidth assignment according to the transferred bandwidth requirements for each service.
